# EUROPEAN PATENT APPLICATION

(11) **EP 3 579 360 A1**
(43) Date of publication of application: **11.12.2019**
(21) Application number: 18748270.8
(22) Date of filing: 31.01.2018
(51) Int. Cl.: H01S 3/067, H01S 3/0941, H01S 3/102

(54) **FIBER LASER, SUPPLY METHOD, AND MANUFACTURING METHOD**

(30) Priority: 31.01.2017 JP 2017016289
(71) Applicant: Fujikura Ltd., Tokyo 135-8512 (JP)
(72) Inventor: NGUYEN, Huy Khanh, Sakura-shi Chiba 285-8550 (JP)
(74) Representative: Plasseraud IP
(86) International application number: PCT/JP2018/003244
(87) International publication number: WO 2018/143284

(57) **Abstract**

In a bidirectional excitation fiber laser, a power of Stokes light to be generated in an amplifying optical fiber is reduced while a power of laser light to be supplied from the amplifying optical fiber is not reduced. A power (PB) of backward excitation light to be supplied to an amplifying optical fiber (AF) via a low-reflective fiber Bragg grating (FBG2) is made greater than a power (PF) of forward excitation light to be supplied to the amplifying optical fiber (AF) via a high-reflective fiber Bragg grating (FBG2).

## Description

### Technical Field

The present invention relates to a bidirectional excitation fiber laser. The present invention also relates to a method for supplying excitation light in such a fiber laser, and to a method for manufacturing such a fiber laser.

### Background Art

A fiber laser is widely used as a laser device for laser processing. A fiber laser is a laser device including a resonator which includes (i) an amplifying optical fiber having a core to which a rare earth element is added, (ii) a high-reflective mirror connected to a first end of the amplifying optical fiber, and (iii) a low-reflective mirror connected to a second end of the amplifying optical fiber. Laser light which has been amplified by the amplifying optical fiber is outputted via the low-reflective mirror.

A fiber laser is roughly classified into a unidirectional excitation fiber laser and a bidirectional excitation fiber laser in accordance with placement of an excitation light source.

According to a unidirectional excitation fiber laser, an excitation light source is connected to a first end of an amplifying optical fiber via a high-reflective mirror or a low-reflective mirror. In a case where a plurality of excitation light sources are used, waves of excitation light which waves have been outputted by the respective plurality of excitation light sources are combined by an excitation combiner which is connected to a high-reflective mirror. Excitation light which has been supplied to an amplifying optical fiber via a high-reflective mirror is used to change a state of a rare earth element added to a core of the amplifying optical fiber to a population inversion state.

In contrast, according to a bidirectional excitation fiber laser, a forward excitation light source is connected to a first end of an amplifying optical fiber via a high-reflective mirror, and a backward excitation light source is connected to a second end of the amplifying optical fiber via a low-reflective mirror. In a case where a plurality of forward excitation light sources are used, waves of excitation light which waves have been outputted by the respective plurality of forward excitation light sources are combined by a forward excitation combiner which is connected to a high-reflective mirror. In a case where a plurality of backward excitation light sources are used, waves of excitation light which waves have been outputted by the respective backward excitation light sources are combined by a backward excitation combiner which is connected to a low-reflective mirror. Excitation light which is transmitted through a high-reflective mirror and enters an amplifying optical fiber is referred to as "forward excitation light". Excitation light which is transmitted through a low-reflective mirror and enters an amplifying optical fiber is referred to as "backward excitation light". According to a bidirectional excitation fiber laser, both forward excitation light and backward excitation light can be used to excite a rare earth element. Thus, a bidirectional excitation fiber laser more easily achieves a greater output power than a unidirectional excitation fiber laser. Examples of a document which discloses a bidirectional excitation fiber laser (fiber amplifier) include Patent Literature 1.

According to a bidirectional excitation fiber laser, laser light which has been supplied from an amplifying optical fiber is transmitted through a backward excitation combiner configured to combine waves of backward excitation light. Thus, a bidirectional excitation fiber laser is ordinarily configured such that backward excitation light has a power that is not more than a power of forward excitation light. A bidirectional excitation fiber laser is ordinarily thus configured because the bidirectional excitation fiber laser thus configured avoids a deterioration caused, due to an influence of backward excitation light, in beam quality of laser light which has been supplied from an amplifying optical fiber.

According to a processing fiber laser, laser light reflected from an object which is being processed (hereinafter referred to as a "processing target object") may re-enter an amplifying optical fiber and cause a malfunction in the amplifying optical fiber. For example, in a case where backward laser light which is propagating in a backward direction in an amplifying optical fiber after being reflected by a processing target object is added to forward laser light which is propagating in a forward direction in the amplifying optical fiber, laser light incident on each point in the amplifying optical fiber has a remarkably high power density. This accelerates stimulated Raman scattering in the amplifying optical fiber. Furthermore, Stokes light which is included in light reflected from a processing target object serves as seed light which accelerates stimulated Raman scattering. The seed light is amplified as it propagates through the amplifying optical fiber, so that stimulated Raman scattering is further accelerated in the amplifying optical fiber. In a case where stimulated Raman scattering is thus accelerated, oscillation of Stokes light may occur. It is known that occurrence of oscillation of Stokes light in an amplifying optical fiber causes a fiber laser to unstably operate and consequently have lower reliability (see Patent Literature 2).

### Citation List

### [Patent Literatures]

[Patent Literature 1]
   Japanese Patent Application Publication, Tokukaihei, No. 5-145161 A (Publication Date: June 11, 1993)
[Patent Literature 2]
   Japanese Patent Application Publication, Tokukai, No. 2015-95641 A (Publication Date: May 18, 2015)

### Summary of Invention

### Technical Problem

In a case where a power of Stokes light to be generated in an amplifying optical fiber is reduced while a power of laser light to be supplied from the amplifying optical fiber is not reduced, it is possible to achieve a fiber laser high in reflection resistance while making no sacrifice of an output power. Note here that "high in reflection resistance" means that oscillation of Stokes light is less likely to occur even in a case where laser light reflected from a processing target object re-enters the amplifying optical fiber.

For example, by increasing a core diameter of an amplifying optical fiber, a power of Stokes light to be generated in the amplifying optical fiber can be reduced while a power of laser light to be supplied from the amplifying optical fiber is not reduced. Note, however, that an increase in core diameter of an amplifying optical fiber brings about an adverse effect of causing an increase in number of propagating modes of the amplifying optical fiber and a deterioration in beam quality of laser light to be supplied from the amplifying optical fiber. Alternatively, a power of Stokes light to be generated in an amplifying optical fiber can be reduced by shortening the amplifying optical fiber. Note, however, that in order to shorten an amplifying optical fiber without reducing a power of laser light to be supplied from the amplifying optical fiber, it is necessary to add a denser rare earth element to a core of the amplifying optical fiber. This brings about an adverse effect of an increase in amount (per unit length) of heat generation by the amplifying optical fiber.

The present invention has been made in view of the problems, and an object of the present invention is to provide a bidirectional excitation fiber laser including an amplifying optical fiber which is less likely to generate Stokes light.

### Solution to Problem

In order to attain the object, a fiber laser in accordance with an aspect of the present invention is a bidirectional excitation fiber laser, the fiber laser including a configuration in which: a power of backward excitation light is greater than a power of forward excitation light.

In order to attain the object, a supply method in accordance with an aspect of the present invention is a method for supplying excitation light in a bidirectional excitation fiber laser, the method including the step of: supplying forward excitation light to an amplifying optical fiber via a high-reflective mirror and supplying backward excitation light to the amplifying optical fiber via a low-reflective mirror, a power of the backward excitation light being greater than a power of the forward excitation light. Note that an operation to supply forward excitation light to an amplifying optical fiber via a high-reflective mirror and an operation to supply backward excitation light to the amplifying optical fiber via a low-reflective mirror do not necessarily need to be carried out simultaneously. That is, these operations can be carried out simultaneously or do not need to be carried out simultaneously.

In order to attain the object, a manufacturing method in accordance with an aspect of the present invention is a method for manufacturing a bidirectional excitation fiber laser, the method including the step of: setting (i) a power of a forward excitation light source configured to generate forward excitation light to be supplied to an amplifying optical fiber via a high-reflective mirror and (ii) a power of a backward excitation light source configured to generate backward excitation light to be supplied to the amplifying optical fiber via a low-reflective mirror, the power of the backward excitation light being set so as to be greater than the power of the forward excitation light.

### Advantageous Effects of Invention

An aspect of the present invention makes it possible to provide a bidirectional excitation fiber laser including an amplifying optical fiber which is less likely to generate Stokes light.

### Brief Description of Drawings

Fig. 1 is a block diagram illustrating a configuration of a fiber laser in accordance with an embodiment of the present invention.
Fig. 2 is a graph schematically showing a population inversion rate of a rare earth element added to a core of an amplifying optical fiber of the fiber laser illustrated in Fig. 1, assuming that a central axis of the amplifying optical fiber is a horizontal axis. A dotted line indicates the population inversion rate which is measured in a case where symmetric excitation is carried out. A solid line indicates the population inversion rate which is measured in a case where asymmetric excitation is carried out.
Fig. 3 is a graph schematically showing a power of laser light which is propagating through a core of an amplifying optical fiber of the fiber laser illustrated in Fig. 1, assuming that a central axis of the amplifying optical fiber is a horizontal axis. A dotted line indicates the power which is measured in a case where symmetric excitation is carried out. A solid line indicates the power which is measured in a case where asymmetric excitation is carried out.
Fig. 4 is a graph showing results of measurement, for a case where asymmetric excitation is carried out and a case where symmetric excitation is carried out, of wavelength dependency of a relative power of light supplied from an amplifying optical fiber of the fiber laser illustrated in Fig. 1.
Fig. 5 is a view schematically illustrating how to wind an amplifying optical fiber of a fiber laser device illustrated in Fig. 1.

### Description of Embodiments

### [Configuration of fiber laser]

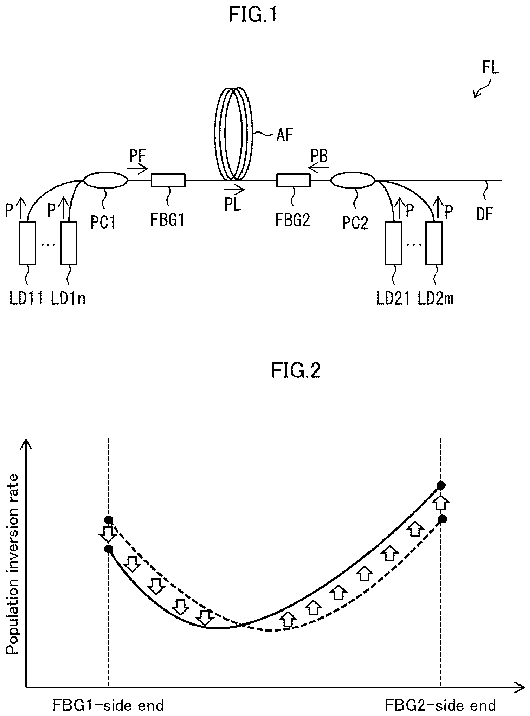

The following description will discuss, with reference to Fig. 1, a configuration of a fiber laser FL in accordance with an embodiment of the present invention. Fig. 1 is a block diagram illustrating a configuration of the fiber laser FL.

The fiber laser FL is a bidirectional excitation fiber laser. As illustrated in Fig. 1, the fiber laser FL includes n forward laser diodes LD11 through LD1n, a forward excitation combiner PC1, a high-reflective fiber Bragg grating FBG1, an amplifying optical fiber AF, a low-reflective fiber Bragg grating FBG2, a backward excitation combiner PC2, and m backward laser diodes LD21 through LD2m, and a delivery fiber DF. Note that n and m are natural numbers which satisfies n<m. Note here that a bidirectional excitation fiber laser refers to a fiber laser which is configured such that both forward excitation light whose power is at least greater than 0 W and backward excitation light whose power is at least greater than 0 W are supplied to the amplifying optical fiber AF.

Each forward laser diode LD1i (i = 1, 2, ..., n) serves as an excitation light source configured to generate forward excitation light. The forward laser diode LD1i generates laser light whose power is P [W]. The forward laser diode LD1i is connected to a corresponding one of input ports of the forward excitation combiner PC1. Forward excitation light generated by the forward laser diode LD1i is supplied to the forward excitation combiner PC1 via a corresponding input port.

The forward excitation combiner PC1 combines together waves of forward excitation light generated by the respective forward laser diodes LD11 through LD1n, so that combined forward excitation light is obtained. The combined forward excitation light obtained in the forward excitation combiner PC1 has a power PF of P×n [W]. The forward excitation combiner PC1 has an output port which is connected to the amplifying optical fiber AF via the high-reflective fiber Bragg grating FBG1. The combined forward excitation light obtained in the forward excitation combiner PC1 passes through the high-reflective fiber Bragg grating FBG1 and is supplied to the amplifying optical fiber AF.

The amplifying optical fiber AF is an optical fiber having a core to which a rare earth element is added. According to an embodiment of the present invention, the amplifying optical fiber AF is a few mode fiber having two or more propagating modes (specifically, a four mode fiber having four propagating modes). The amplifying optical fiber AF has (i) a first end which is connected to the high-reflective fiber Bragg grating FBG1 which functions as a high-reflective mirror and (ii) a second end which is connected to the low-reflective fiber Bragg grating FBG2 which functions as a low-reflective mirror. The amplifying optical fiber AF, the high-reflective fiber Bragg grating FBG1, and the low-reflective fiber Bragg grating FBG2 constitute a laser oscillator configured to oscillate laser light. Forward excitation light (described earlier) and backward excitation light (described later) are used to change a state of a rare earth element (described earlier) to a population inversion state. The amplifying optical fiber AF has an exit end which is connected to an output port of the backward excitation combiner via the low-reflective fiber Bragg grating FBG2. Of waves of laser light generated in the amplifying optical fiber AF, laser light which has passed through the low-reflective fiber Bragg grating FBG2 is supplied to the backward excitation combiner PC2 via the output port.

Each backward laser diode LD2j (j = 1, 2, ..., m) serves as an excitation light source configured to generate backward excitation light. The backward laser diode LD2j generates laser light whose power is P [W], which is identical to the power of the laser light which is generated by the forward laser diode LD1i. The backward laser diode LD2j is connected to a corresponding one of peripheral input ports (input ports different from a central input port) of the backward excitation combiner PC2. Backward excitation light generated by the backward laser diode LD2j is supplied to the backward excitation combiner PC2 via a corresponding peripheral input port.

The backward excitation combiner PC2 combines together waves of backward excitation light generated by the respective backward laser diodes LD21 through LD2m, so that combined backward excitation light is obtained. The combined backward excitation light obtained in the backward excitation combiner PC2 has a power PB of P×m [W], which is greater than the power PF of P×n of the combined forward excitation light obtained in the forward excitation combiner PC1. As described earlier, the output port of the backward excitation combiner PC2 is connected to the amplifying optical fiber AF via the low-reflective fiber Bragg grating FBG2. The combined backward excitation light obtained in the backward excitation combiner PC2 passes through the low-reflective fiber Bragg grating FBG2 and is supplied to the amplifying optical fiber AF. The central input port of the backward excitation combiner PC2 is connected to the delivery fiber DF. Laser light which has been supplied to the backward excitation combiner PC2 via the output port is supplied from the backward excitation combiner PC2 via the central input port and then supplied to the delivery fiber DF.

### [Characteristic point of fiber laser]

The fiber laser FL is configured such that a power of backward excitation light PB (hereinafter referred to as "a backward excitation light power PB") is greater than a power of forward excitation light PF (hereinafter referred to as "a forward excitation light power PF") (hereinafter, such a configuration is also referred to as "asymmetric excitation"). This is the most characteristic point of the fiber laser FL. The fiber laser FL thus configured can further reduce a power of Stokes light, which is to be generated by stimulated Raman scattering in the fiber laser FL, as compared with the fiber laser FL which is configured such that a backward excitation light power PB is made equal to a forward excitation light power PF while a total of the backward excitation light power PB and the forward excitation light power PF (PB+PF) is unchanged (hereinafter, such a configuration is also referred to as "symmetric excitation").

The fiber laser FL which is configured such that asymmetric excitation is carried out can reduce a power of Stokes light for the following reasons.

Specifically, in a case where symmetric excitation (PB = PF) is changed to asymmetric excitation (PB > PF) while a total of the backward excitation light power PB and the forward excitation light power PF (PB+PF) is unchanged, a population inversion rate of a rare earth element added to a core of the amplifying optical fiber AF (i) increases at and near the low-reflective fiber Bragg grating FBG2 which is on a side on which an entrance of the amplifying optical fiber AF, from which entrance backward excitation light enters the amplifying optical fiber AF, is located and (ii) decreases at and near the high-reflective fiber Bragg grating FBG1 which is an entrance of the amplifying optical fiber AF, from which entrance forward excitation light enters the amplifying optical fiber AF (see Fig. 2). Fig. 2 is a schematic graph in which a population inversion rate of a rare earth element added to a core of the amplifying optical fiber AF is a vertical axis and a central axis of the amplifying optical fiber AF is a horizontal axis. In Fig. 2, a dotted line indicates the population inversion rate which is measured in a case where symmetric excitation is carried out, and a solid line indicates the population inversion rate which is measured in a case where asymmetric excitation is carried out.

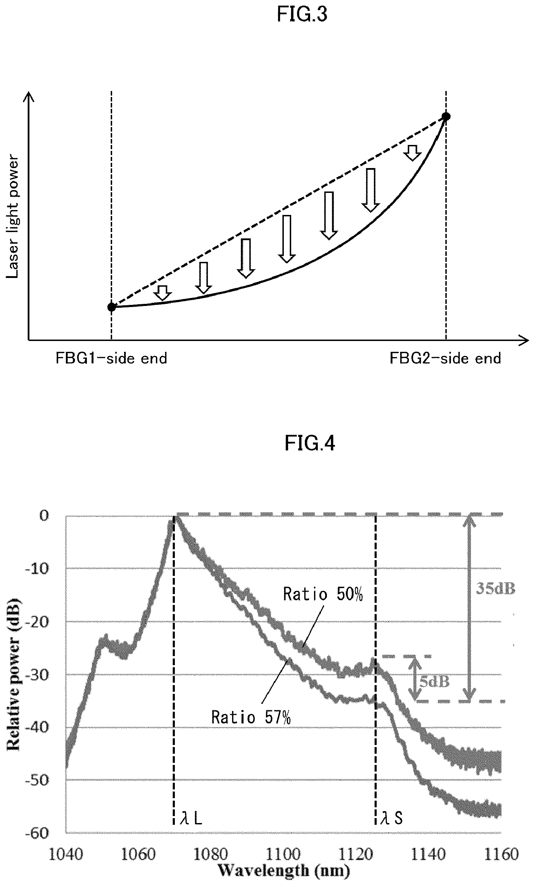

In a case where a population inversion rate of a rare earth element added to a core of the amplifying optical fiber AF changes as described earlier, a power of laser light which is propagating through the core of the amplifying optical fiber AF (i) is kept substantially unchanged in immediate proximity to (a) the low-reflective fiber Bragg grating FBG2 through which forward laser light exits and (b) the high-reflective fiber Bragg grating FBG1 through which backward laser light exits and (ii) decreases in the other region (see Fig. 3). Fig. 3 is a graph schematically showing a power of laser light which is propagating through the core of the amplifying optical fiber AF, assuming that a central axis of the amplifying optical fiber AF is a horizontal axis. In Fig. 3, a dotted line indicates the power which is measured in a case where symmetric excitation is carried out, and a solid line indicates the power which is measured in a case where asymmetric excitation is carried out.

In a case where a power of laser light which is propagating through the core of the amplifying optical fiber AF changes as described earlier, a power of Stokes light to be generated by stimulated Raman scattering at the core of the amplifying optical fiber AF is reduced. This is because (a) a power of Stokes light to be generated by stimulated Raman scattering at each point in the core of the amplifying optical fiber AF and (b) a power of laser light which is propagating through that point have therebetween a strong positive correlation. For the above reasons, a power of Stokes light can be reduced by carrying out asymmetric excitation.

In Fig. 3, a power of laser light which is propagating through the core of the amplifying optical fiber AF is kept substantially unchanged in immediate proximity to the low-reflective fiber Bragg grating FBG2. As described above, a power of Stokes light to be generated in the amplifying optical fiber AF can be reduced while a reduction in power of laser light to be supplied from the amplifying optical fiber AF is minimized.

In order to confirm that it is possible to reduce a power of Stokes light by carrying out asymmetric excitation, the inventors of the present invention measured wavelength dependency of a relative power of light, outputted by the amplifying optical fiber AF, while changing a ratio between a backward excitation light power and a forward excitation light power (a power measured at a lasing wavelength λL of the fiber laser FL is assumed to be 0 dB). Fig. 4 is a graph showing results of measurement for a case where asymmetric excitation is carried out at PB:PF=57:43 and a case where symmetric excitation is carried out at PB:PF=50:50. In the graph shown in Fig. 4, a relative power obtained at Stokes wavelength AS obtained by adding, to the lasing wavelength λL, a wavelength corresponding to a Raman shift corresponds to a relative power of Stokes light to be generated by the fiber laser FL. According to Fig. 4, it is confirmed that a relative power of Stokes light is made lower by approximately 5dB in a case where asymmetric excitation is carried out than in a case where symmetric excitation is carried out. In a case where a proportion of the backward excitation light power PB in a total of the backward excitation light power PB and the forward excitation light power PF (PB+PF) is more than 57%, an effect equal to or greater than such an effect as described above is obtained. A proportion of the backward excitation light power PB in a total of the backward excitation light power PB and the forward excitation light power PF (PB+PF) is more preferably not less than 60% and still more preferably not less than 65%. Note that a proportion of the backward excitation light power PB in a total of the backward excitation light power PB and the forward excitation light power PF (PB+PF) is less than 100%.

The fiber laser FL in accordance with an embodiment of the present invention is configured such that the backward excitation light power PB is made greater than the forward excitation light power PF by causing each backward laser diode LD2j and each forward laser diode LD1i to be equal in output power and then causing the m backward laser diodes LD21 through LD2m to be more than the n forward laser diodes LD11 through LD1n (such a configuration is hereinafter referred to as "the former configuration"). Note, however, that an aspect of the present invention does not necessarily need to be thus configured. For example, an aspect of the present invention can alternatively be configured such that the m backward laser diodes LD21 through LD2m are made as many as the n forward laser diodes LD11 through LD1n and then a driving electric current to be supplied to each backward laser diode LD2j is made larger than a driving electric current to be supplied to each forward laser diode LD1i (such a configuration is hereinafter referred to as "the latter configuration"). Note, however, that, as compared with the latter configuration, the former configuration allows a malfunction to less likely to occur in each backward laser diode LD2j. This is because, as compared with the latter configuration, the former configuration (i) further allows minimization of an output power of each backward laser diode LD2j and (ii) further allows minimization of a power of laser light to enter each backward laser diode LD2j (laser light outputted via a peripheral input port of the backward excitation combiner PC2 without being outputted via the central input port of the backward excitation combiner PC2).

The fiber laser FL in accordance with an embodiment of the present invention is configured such that a few mode fiber is used as the amplifying optical fiber AF (such a configuration is hereinafter referred to as "the former configuration"). Note, however, that an aspect of the present invention does not necessarily need to be thus configured. For example, the fiber laser FL in accordance with an embodiment of the present invention can alternatively be configured such that a single mode fiber is used as the amplifying optical fiber AF (such a configuration is hereinafter referred to as "the latter configuration"). Note, however, that, as compared with the latter configuration, the former configuration further allows minimization of a power of Stokes light to be generated by stimulated Raman scattering in the amplifying optical fiber AF. This is because, since a few mode fiber is larger in core diameter than a single mode fiber, the former configuration further allows minimization of a density of laser light at the core of the amplifying optical fiber AF.

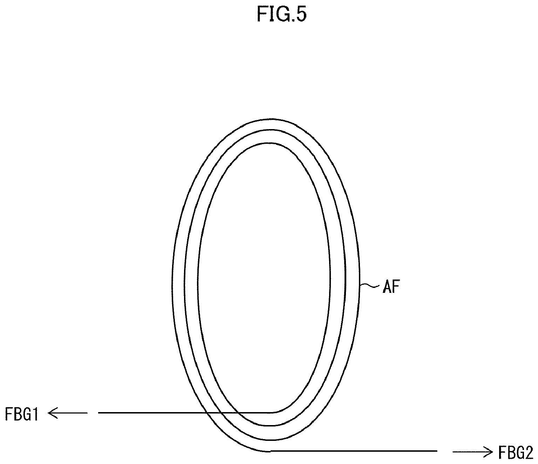

The fiber laser FL in accordance with an embodiment of the present invention is preferably configured such that the amplifying optical fiber AF is wound in a form of a coil so that an end of the amplifying optical fiber AF which end is connected to the low-reflective fiber Bragg grating FBG2 is located on an outer side of the amplifying optical fiber AF. An example of the amplifying optical fiber AF which is wound as described above is as illustrated in Fig. 5. According to the amplifying optical fiber AF, the backward excitation light power PB is greater than the forward excitation light power PF. Thus, an end of the amplifying optical fiber AF which end is connected to the low-reflective fiber Bragg grating FBG2 which is on a side on which an entrance of the amplifying optical fiber AF, from which entrance backward excitation light enters the amplifying optical fiber AF, is located is larger in amount of heat generation than an end of the amplifying optical fiber AF which end is connected to the high-reflective fiber Bragg grating FBG1 which is on a side on which an entrance of the amplifying optical fiber AF, from which entrance forward excitation light enters the amplifying optical fiber AF, is located. The amplifying optical fiber AF thus wound is configured has (i) an end which is relatively larger in amount of heat generation and is provided on an outer side of the coil which outer side is higher in efficiency with which to release heat and (ii) an end which is relatively smaller in amount of heat generation and is provided on an inner side of the coil which inner side is lower in efficiency with which to release heat. This allows the amplifying optical fiber AF as a whole to release heat with high efficiency.

In a start-up sequence of the fiber laser FL in accordance with an embodiment of the present invention, it is preferable to employ a method for causing a timing at which to turn on the forward laser diodes LD11 through LD1n to differ from a timing at which to turn on the backward laser diodes LD21 through LD2m. In a case where a method for simultaneously turning on the forward laser diodes LD11 through LD1n and the backward laser diodes LD21 through LD2m is employed, a peak of forward excitation light generated during turning-on of the forward laser diodes LD11 through LD1n and a peak of backward excitation light generated during turning-on of the backward laser diodes LD21 through LD2m coincide with each other in the amplifying optical fiber AF. This causes a momentary increase in power of excitation light which is propagating through a clad of the amplifying optical fiber AF. This results in a momentary increase in power of laser light to be generated in the amplifying optical fiber AF. In this case, many waves of Stokes light are generated in the amplifying optical fiber AF. This causes the fiber laser FL to unstably operate. In contrast, by employing the method for causing a timing at which to turn on the forward laser diodes LD11 through LD1n to differ from a timing at which to turn on the backward laser diodes LD21 through LD2m, it is possible to prevent a peak of forward excitation light generated during turning-on of the forward laser diodes LD11 through LD1n and a peak of backward excitation light generated during turning-on of the backward laser diodes LD21 through LD2m from coinciding with each other in the amplifying optical fiber AF. This makes it possible to prevent the fiber laser FL from unstably operating due to such a mechanism as described earlier.

### [Recap]

A fiber laser (FL) in accordance with an embodiment of the present invention is a bidirectional excitation fiber laser (FL), the fiber laser (FL) including a configuration in which: a power (PB) of backward excitation light is greater than a power (PF) of forward excitation light.

A supply method in accordance with an embodiment of the present invention is a method for supplying excitation light in a bidirectional excitation fiber laser (FL), the method including the step of: supplying forward excitation light to an amplifying optical fiber (AF) via a high-reflective mirror (FBG1) and supplying backward excitation light to the amplifying optical fiber (AF) via a low-reflective mirror (FBG2), a power of the backward excitation light being greater than a power of the forward excitation light. Note that an operation to supply forward excitation light to an amplifying optical fiber via a high-reflective mirror and an operation to supply backward excitation light to the amplifying optical fiber via a low-reflective mirror do not necessarily need to be carried out simultaneously. That is, these operations can be carried out simultaneously or do not need to be carried out simultaneously.

A manufacturing method in accordance with an embodiment of the present invention is a method for manufacturing a bidirectional excitation fiber laser (FL), the method including the step of: setting (i) a power (PF) of a forward excitation light source (LD11 through LD1n) configured to generate forward excitation light to be supplied to an amplifying optical fiber (AF) via a high-reflective mirror (FBG1) and (ii) a power (PB) of a backward excitation light source (LD21 through LD2m) configured to generate backward excitation light to be supplied to the amplifying optical fiber (AF) via a low-reflective mirror (FBG2), the power (PB) of the backward excitation light being set so as to be greater than the power (PF) of the forward excitation light.

The configuration makes it possible to bring about an effect of reducing a power of Stokes light to be generated in an amplifying optical fiber.

A fiber laser in accordance with an embodiment of the present invention further includes, for example, an amplifying optical fiber (AF); a high-reflective mirror (FBG1) provided on a side closer to a first end of the amplifying optical fiber (AF); a low-reflective mirror (FBG2) provided on a side closer to a second end of the amplifying optical fiber (AF); a forward excitation light source (LD11 through LD1n) configured to generate the forward excitation light; and a backward excitation light source (LD21 through LD2m) configured to generate the backward excitation light. In this case, the effect (described earlier) can be obtained by making the power of the backward excitation light greater than the power of the forward excitation light, the backward excitation light being supplied to the amplifying optical fiber via the low-reflective mirror, the forward excitation light being supplied to the amplifying optical fiber via the high-reflective mirror.

The fiber laser (FL) in accordance with an embodiment of the present invention is preferably configured such that the amplifying optical fiber (AF) is a few mode fiber.

As compared with a case where an amplifying optical fiber is a single mode fiber, the configuration further allows minimization of a power of Stokes light to be generated by stimulated Raman scattering in an amplifying optical fiber.

The fiber laser (FL) in accordance with an embodiment of the present invention is preferably configured such that the amplifying optical fiber (AF) is wound so that the second end thereof, which is closer to the low-reflective mirror (FBG2), is provided on an outer side of the amplifying optical fiber (AF).

As compared with a case where an amplifying fiber is wound so that an end thereof connected to a low-reflective mirror is provided on an inner side of the amplifying fiber, the configuration allows an amplifying fiber to release heat with higher efficiency.

The fiber laser (FL) in accordance with an embodiment of the present invention is preferably configured such that in a start-up sequence of the fiber laser (FL), a timing at which to turn on the forward excitation light source (LD11 through LD1n) differs from a timing at which to turn on the backward excitation light source (LD21 through LD2m).

As compared with a case where a forward excitation light source and a backward excitation light source are simultaneously turned on, the configuration makes it possible to further prevent an unstable operation which may be carried out by a fiber laser during turning-on of a forward excitation light source and a backward excitation light source.

The fiber laser (FL) in accordance with an embodiment of the present invention is preferably configured such that the backward excitation light source (LD21 through LD2m) includes laser diodes (LD2j) which are more than laser diodes (LD1i) which the forward excitation light source (LD11 through LD1n) includes.

As compared with a case where a backward excitation light source includes laser diodes which are not more than laser diodes which a forward excitation light source includes, the configuration makes it possible to further minimize an output power per laser diode. This allows each of the laser diodes of the backward excitation light source to have a longer life.

### [Additional Remarks]

The present invention is not limited to the embodiments described herein, but can be altered by a skilled person in the art within the scope of the claims. That is, an embodiment derived from a proper combination of technical means appropriately modified within the scope of the claims is also encompassed in the technical scope of the present invention.

### Reference Signs List

FL Fiber laser
LD11 through LD1n Forward laser diode
PC1 Forward excitation combiner
FBG1 High-reflective fiber Bragg grating
AF Amplifying optical fiber
FBG2 Low-reflective fiber Bragg grating
LD21 through LD2m Backward laser diode
PC2 Backward excitation combiner

## Claims

1. A fiber laser being a bidirectional excitation fiber laser,
said fiber laser comprising a configuration in which:
a power of backward excitation light is greater than a power of forward excitation light.

2. A fiber laser as set forth in claim 1, further comprising:
an amplifying optical fiber;
a high-reflective mirror provided on a side closer to a first end of the amplifying optical fiber;
a low-reflective mirror provided on a side closer to a second end of the amplifying optical fiber;
a forward excitation light source configured to generate the forward excitation light; and
a backward excitation light source configured to generate the backward excitation light,
the power of the backward excitation light being greater than the power of the forward excitation light, the backward excitation light being supplied to the amplifying optical fiber via the low-reflective mirror, the forward excitation light being supplied to the amplifying optical fiber via the high-reflective mirror.

3. The fiber laser as set forth in claim 2, wherein the amplifying optical fiber is a few mode fiber.

4. The fiber laser as set forth in claim 2 or 3, wherein the amplifying optical fiber is wound so that the second end thereof, which is closer to the low-reflective mirror, is provided on an outer side of the amplifying optical fiber.

5. The fiber laser as set forth in any one of claims 2 through 4, wherein in a start-up sequence of the fiber laser, a timing at which to turn on the forward excitation light source differs from a timing at which to turn on the backward excitation light source.

6. The fiber laser as set forth in any one of claims 2 through 5, wherein the backward excitation light source includes laser diodes which are more than laser diodes which the forward excitation light source includes.

7. A method for supplying excitation light in a bidirectional excitation fiber laser,
said method comprising the step of:
supplying forward excitation light to an amplifying optical fiber via a high-reflective mirror and supplying backward excitation light to the amplifying optical fiber via a low-reflective mirror,
a power of the backward excitation light being greater than a power of the forward excitation light.

8. A method for manufacturing a bidirectional excitation fiber laser,
said method comprising the step of:
setting (i) a power of a forward excitation light source configured to generate forward excitation light to be supplied to an amplifying optical fiber via a high-reflective mirror and (ii) a power of a backward excitation light source configured to generate backward excitation light to be supplied to the amplifying optical fiber via a low-reflective mirror,
the power of the backward excitation light being set so as to be greater than the power of the forward excitation light.
